# FASCICULE DE BREVET EUROPEEN

(11) **EP 0 938 995 B1**
(45) Date de publication et mention de la délivrance du brevet: **02.10.2002**
(21) Numéro de dépôt: 99400199.8
(22) Date de dépôt: 28.01.1999
(51) Int. Cl.: B60J 10/04, B60J 10/00

(54) **Nouveau profilé d'étanchéité pour encadrement de vitre coulissante, notamment de porte de véhicule automobile, et son procédé de fabrication**
Dichtungselement für Schiebefenster, insbesondere für eine Kraftfahrzeugtür und Verfahren zu deren Herstellung
Sealing profile for sliding window, especially for a motor vehicle door and method for making same

(30) Priorité: 26.02.1998 FR 9802324
(43) Date de publication de la demande: 01.09.1999
(73) Titulaire: BTR SEALING SYSTEMS FRANCE, 92000 Nanterre (FR)
(72) Inventeur: Paul, Jean-Claude, 27910 Perriers sur Andelle (FR)
(74) Mandataire: Jolly, Jean-Pierre

(56) Documents cités:
- EP-A- 0 307 304
- EP-A- 0 384 851
- FR-A- 2 466 362
- FR-A- 2 564 047

## Description

La présente invention concerne un nouveau profilé d'étanchéité pour encadrement de vitre coulissante, notamment de porte de véhicule automobile, et son procédé de fabrication.

L'invention concerne plus particulièrement un profilé du type comprenant une première partie formant pince, à section transversale en U, apte à coiffer et pincer un bord saillant de l'encadrement de vitre, et une seconde partie dite "coulisse", attenante à la précédente et ayant une section transversale en U inversée par rapport à celle-ci, cette seconde partie étant destinée à guider la vitre coulissante dans ses mouvements et à la coiffer de façon étanche en position de fermeture, suivant toute la portion de sa périphérie contiguë à l'encadrement de vitre.

On sait que de tels profilés sont habituellement réalisés sous forme monobloc, par extrusion ou coextrusion d'au moins un élastomère et/ou d'au moins une matière thermoplastique, avec éventuellement une armature métallique gainée au moins partiellement par l'un et/ou l'autre des matériaux des deux parties à section en U.

Les propriétés requises de ces deux parties sont généralement différentes, puisque celle qui coiffe un bord saillant de l'encadrement de vitre comporte habituellement au moins une lèvre souple, faisant saillie à partir de la face d'au moins une branche du U tournée vers l'autre branche, cette lèvre étant apte à s'escamoter lorsque cette partie est mise en position sur le bord saillant associé, pour s'opposer ensuite à leur désolidarisation accidentelle, tandis que la partie qui guide la vitre doit être suffisamment rigide pour résister aux sollicitations de celle-ci.

Chaque partie en U peut en outre comprendre des revêtements locaux en un élastomère ou en une matière thermoplastique différente et la fabrication par coextrusion de tels profilés relativement complexes et leur mise en forme peuvent poser des problèmes.

On a déjà proposé de réaliser en deux parties distinctes des profilés de ce type général (voir EP-A-0 307 304 ou FR-A-2 564 047 ), mais la solidarisation de ces deux parties par des lèvres faisant saillie vers l'intérieur de la partie à section en U formant pince, qui plaquent une paroi de la partie formant coulisse contre la feuillure coiffée par cette pince, se révèle très insuffisante dans la pratique.

La présente invention vise à remédier à cet inconvénient en rendant solidaires l'une de l'autre les deux parties à section en U de tels profilés, fabriquées séparément et livrées séparément aux utilisateurs, par simple encliquetage ou clipsage sur le lieu d'utilisation de portions de formes sensiblement complémentaires.

L'invention a également pour but de réduire le coût de tels profilés, par utilisation de matières élastomères ou thermoplastiques peu onéreuses et, éventuellement, par suppression de l'armature métallique en certains emplacements.

A cet effet, l'invention a objet un profilé d'étanchéité pour encadrement de vitre coulissante du type mentionné ci-dessus, dont la première partie à section en U formant pince et la seconde partie à section en U ou "coulisse" sont deux profilés élémentaires distincts, extrudés ou moulés, une branche du U de chaque profilé élémentaire étant engagée à l'intérieur de l'autre profilé élémentaire, les branches ainsi engagées étant en contact mutuel par une face latérale, ce profilé étant caractérisé en ce que les branches en contact mutuel de chacun des profilés élémentaires sont rendues solidaires l'une de l'autre par clipsage de parties de formes sensiblement complémentaires des faces en contact.

Dans une forme de mise en oeuvre préférée de l'invention, la branche du U du profilé formant pince engagée dans le profilé formant coulisse est pincée entre la branche du U de cette coulisse engagée dans la partie formant pince et une cloison faisant saillie vers l'intérieur de la coulisse à partir de la base du U de celle-ci, la branche de la partie formant pince engagée dans la coulisse étant au contact des faces contiguës de la branche de la coulisse et de la cloison entre lesquelles elle est engagée et étant rendue solidaire de celles-ci par clipsage de parties de formes sensiblement complémentaires des surfaces en contact mutuel.

Il est clair que les profilés élémentaires à section en U pourront aisément être conformés à chaud au profil exact désiré et revêtus localement par surmoulage d'un ou d'autres élastomères et/ou matières thermoplastiques. Il sera ainsi possible de conférer localement à chacun d'entre eux les propriétés désirées, par exemple des propriétés mécaniques, de résistance à la chaleur, de résistance au rayonnement ultra-violet ou autres, qu'il est plus difficile d'obtenir avec les profilés en une seule pièce de la technique antérieure.

C'est ainsi, avantageusement, que le profilé formant pince pourra être réalisé en un matériau souple (élastomère ou matière thermoplastique souple), dans lequel pourra éventuellement être insérée une armature métallique déformable, tandis que le profilé formant coulisse pourra être réalisé en un matériau rigide tel que du polychlorure de vinyle dur ou du polypropylène, le polychlorure de vinyle dur étant préféré, en raison de son faible coût, éventuellement sans armature métallique.

L'étanchéité au contact de la vitre sera assurée :
- d'une part, par une ou des lèvres en un matériau souple constituant le profilé formant pince, ces lèvres faisant saillie à l'extérieur de la branche du U de ce profilé engagée dans le profilé formant coulisse, vers l'intérieur de celle-ci ;
- d'autre part, par une ou des lèvres en un matériau souple rapporté sur la branche du U du profilé formant coulisse non engagée dans le profilé formant pince et faisant saillie à partir de cette branche vers l'intérieur de cette coulisse.

D'autres lèvres en un matériau souple rapporté à l'extérieur de la base du U du profilé formant coulisse pourront également être prévues, de manière à pouvoir s'interposer entre cette coulisse et l'encadrement de vitre. Une ou plusieurs lèvres en un matériau souple peuvent également être rapportées à l'intérieur de la base du U pour augmenter le contact avec la vitre coulissante.

Si le matériau rigide constituant le profilé formant coulisse est sensible au rayonnement ultra-violet, ce qui est le cas du polychlorure de vinyle, on remédiera avantageusement à cet inconvénient en revêtant la face externe de la branche de la coulisse tournée vers l'extérieur d'un matériau souple résistant aux rayons ultra-violets, par exemple d'un matériau coloré, qui "habillera" en outre la coulisse.

La présente invention a également pour objet un procédé de fabrication du profilé défini ci-dessus, ce procédé étant caractérisé en ce que l'on réalise séparément les deux profilés élémentaires à section en U formant respectivement pince et coulisse en ménageant sur la face d'une branche du U de chacun d'entre eux tournée vers l'intérieur de ce profilé des parties de formes sensiblement complémentaires aptes à coopérer par clipsage, en ce que l'on dispose les deux profilés en position inversée l'un par rapport à l'autre, en ce que l'on engage la branche de chaque profilé dont une surface présente une partie de forme sensiblement complémentaire de celle d'une partie d'une branche de l'autre profilé à l'intérieur de cet autre profilé, en ce que l'on amène en contact mutuel les faces des branches engagées dans les deux profilés dans une position telle que les parties de formes complémentaires soient en regard l'une de l'autre et en ce que l'on rend ces branches solidaires l'une de l'autre par clipsage desdites parties.

Dans la forme de réalisation où le profilé formant coulisse comporte une cloison faisant saillie vers l'intérieur à partir de la base du U, l'assemblage par clipsage des deux profilés s'effectuera de façon simple, après avoir amené ces profilés en position inversée, en engageant, entre cette cloison et la branche du profilé formant coulisse qui présente des parties clipsables, la branche associée du profilé formant pince, jusqu'à ce que s'emboîtent les parties de forme complémentaire.

Les deux profilés seront, de préférence, assemblés par clipsage après conformage à chaud, pour faciliter ce conformage.

Les deux formes de réalisation du profilé conforme à l'invention qui ont été mentionnées ci-dessus vont être décrites ci-après plus en détail, en référence aux dessins schématiques annexés. Sur ces dessins :
la figure 1 est une coupe transversale de la première forme de réalisation, avec les profilés formant respectivement pince et coulisse en position assemblée ;
la figure 2 est une vue analogue à la figure 1 de la seconde forme de réalisation.

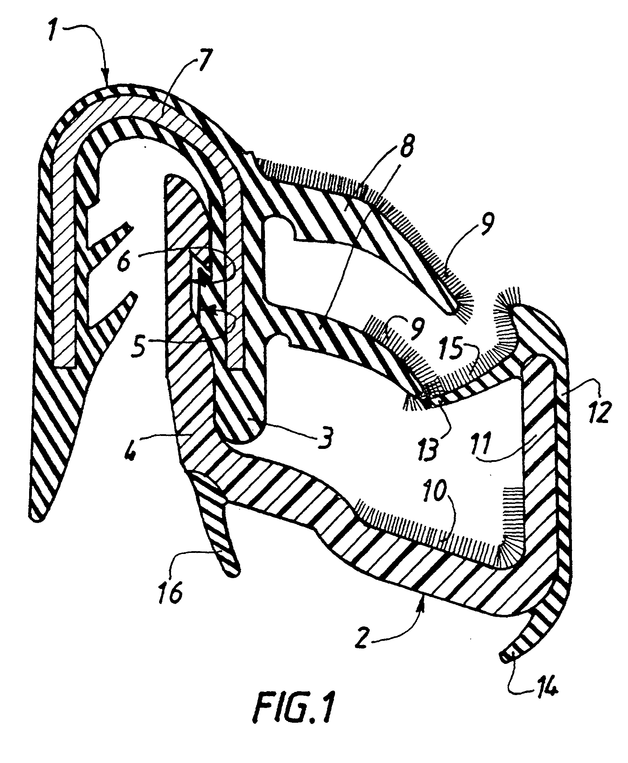

On se réfèrera d'abord à la figure 1, où le profilé à section en U destiné à pincer le bord saillant d'un encadrement de vitre coulissante d'une porte d'automobile est désigné par la référence 1, tandis que le profilé à section en U formant coulisse, destiné à guider dans ses mouvements la vitre coulissante et à assurer l'étanchéité de celle-ci en position de fermeture, est désigné par la référence 2. Les profilés 1 et 2 sont distincts et disposés en des positions inversées, avec une branche 3 du U du profilé 1 engagée à l'intérieur du profilé 2 et une branche 4 du U du profilé 2 engagée à l'intérieur du profilé 1. Les surfaces tournées l'une vers l'autre des branches 3 et 4 sont en contact mutuel et comportent des parties de forme sensiblement complémentaires, respectivement 5 et 6, aptes à s'imbriquer l'une dans l'autre par clipsage, pour solidariser les deux profilés. Les profilés 1 et 2 sont venus d'extrusion ou de moulage.

Le profilé 1 formant pince est en un élastomère souple, par exemple en un caoutchouc E.P.D.M., ou en une matière plastique souple, et il comporte une armature métallique déformable 7, sur laquelle l'élastomère (ou la matière plastique) a été extrudé ou moulé. Des lèvres souples 8, comportant à leur surface un flocage 9 ou un revêtement glissant, font saillie latéralement à partir de la branche 3 du profilé 1 vers l'intérieur du profilé 2, afin de venir lécher la surface interne de la vitre coulissante (non représentée) pour la guider dans ses mouvements et en position de fermeture de celle-ci.

Le profilé 2 formant coulisse est en une matière thermoplastique extrudée ou moulée rigide, par exemple en polychlorure de vinyle rigide ou en polypropylène. Un flocage 10 ou un revêtement glissant est prévu sur la partie interne de la base du U du profilé destinée à recevoir la vitre coulissante et sur la branche 11 disposée en regard de la branche 4.

Le polychlorure de vinyle rigide étant sensible aux rayons ultra-violets, la face externe de cette branche 11 est revêtue d'une couche 12 de polychlorure de vinyle souple de meilleure qualité, coloré ou non, à laquelle sont attenantes, à la partie supérieure de la branche 11, une lèvre 13 revêtue d'un flocage 15 ou d'un revêtement glissant, qui vient lécher la face externe de la vitre mobile, et, au-dessous de la base de la coulisse 2, une lèvre 14, qui vient s'interposer entre la coulisse et l'encadrement de vitre. De façon analogue, une seconde lèvre 16 en polychlorure de vinyle souple est rapportée au-dessous de la base du profilé 2, sous la branche 4.

Le profilé 2 peut être conformé aisément à chaud et l'assemblage des branches 3 et 4 sera effectué par clipsage lors du montage sur le véhicule.

On notera que le polychlorure de vinyle rigide dont est constituée la coulisse 2 est un matériau bon marché, ce qui permet de réduire sensiblement le coût du profilé.

On notera également que les deux profilés en U se prêtent aisément aux longueurs différentes de développée généralement imposées par la géométrie des encadrements de vitre.

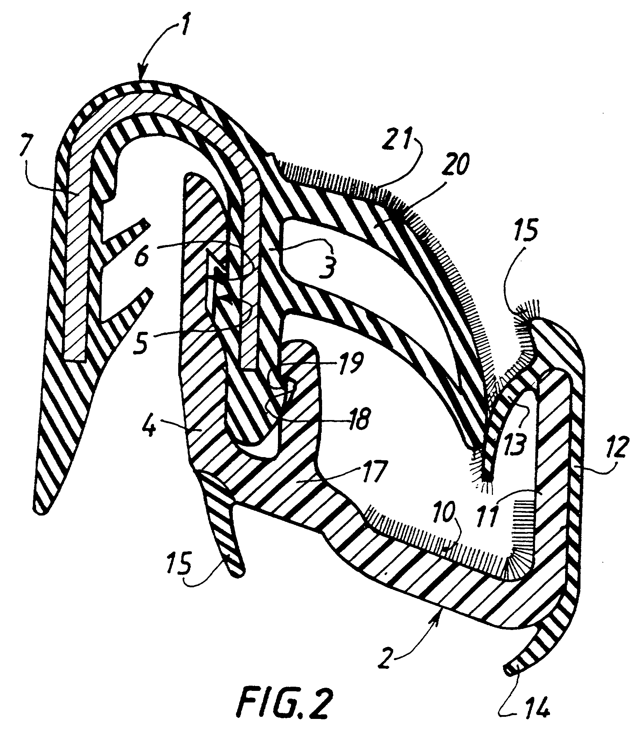

Sur la figure 2, qui représente une variante du profilé de la figure 1, les organes déjà décrits sont désignés par les mêmes chiffres de référence.

Dans cette variante, une cloison 17 fait saillie à partir de la base de la coulisse 2 vers l'intérieur de celle-ci et les faces tournées l'une vers l'autre de cette cloison et de la branche 3 de la partie formant pince 1 comportent des parties de formes sensiblement complémentaires, 18 et 19, aptes à coopérer par clipsage. Dans cette variante, la branche 3 de la partie formant pince 1 est donc pincée entre la branche 4 de la coulisse 2 et la cloison 17 de celle-ci et coopère par clipsage avec ces deux éléments.

On notera que, dans cette variante, une unique lèvre tubulaire 20, revêtue d'un flocage 21, fait saillie latéralement à partir de la branche 3 de la partie formant pince 1 vers l'intérieur de la coulisse 2, pour venir lécher l'intérieur de la vitre mobile.

Comme précédemment, les longueurs de développée des deux profilés peuvent être différentes pour s'adapter à la géométrie de l'encadrement de vitre.

En revanche, l'assemblage par clipsage des deux profilés, généralement effectué après conformage à chaud, sera réalisé avant montage sur le véhicule, car cet assemblage est suffisamment résistant.

## Revendications

1. Profilé d'étanchéité pour encadrement de vitre coulissante, du type comprenant une première partie formant pince (1), à section transversale en U, apte à coiffer et pincer un bord saillant de l'encadrement de vitre, et une seconde partie dite "coulisse" (2), attenante à la précédente et ayant une section transversale en U inversée par rapport à celle-ci, cette seconde partie (2) étant destinée à guider la vitre coulissante dans ses mouvements et à la coiffer de façon étanche en position de fermeture, suivant toute la partie de sa périphérie contiguë à l'encadrement de vitre, la première partie à section en U formant pince (1) et la seconde partie à section en U ou "coulisse" (2) étant deux profilés élémentaires distincts, extrudés ou moulés, avec une branche (3, 4) du U de chaque profilé (1, 2) élémentaire engagée à l'intérieur de l'autre profilé élémentaire, les branches (3, 4) ainsi engagées étant en contact mutuel par une face latérale, ce profilé étant **caractérisé en ce que** les branches (3, 4) en contact mutuel de chacun des profilés élémentaires (1, 2) sont rendues solidaires l'une de l'autre par clipsage de parties (5, 6) de forme sensiblement complémentaire des faces en contact.

2. Profilé selon la revendication 1, **caractérisé en ce que** la branche (3) du U du profilé formant pince (1) engagée dans le profilé formant coulisse (2) est pincée entre la branche (5) du U de cette coulisse engagée dans la partie formant pince (1) et une cloison (17) faisant saillie vers 1 'intérieur de la coulisse à partir de la base du U de celle-ci, la branche (3) de la partie formant pince engagée dans la coulisse étant au contact des faces contiguës de la branche de la coulisse et de la cloison entre lesquelles elle est engagée et étant rendue solidaire de celles-ci par clipsage de parties (5, 6 ; 18, 19) de formes sensiblement complémentaires des surfaces en contact mutuel.

3. Profilé selon l'une des revendications 1 et 2, **caractérisé en ce que** le profilé (1) formant pince est en un élastomère ou en une matière thermoplastique souple et comporte de préférence une armature métallique déformable (7).

4. Profilé selon la revendication 3, **caractérisé en ce que** la branche (3) du profilé (1) formant pince engagée à l'intérieur de la coulisse (2) comporte au moins une lèvre (8, 20) dirigée vers l'intérieur de cette coulisse et apte à lécher la face interne de la vitre coulissante.

5. Profilé selon l'une des revendications 1 à 4, **caractérisé en ce que** le profilé (2) formant coulisse est en une matière thermoplastique rigide, de préférence sans armature métallique.

6. Profilé selon la revendication 5, **caractérisé en ce qu'**au moins une lèvre (13) en un matériau souple rapporté sur la branche (11) du profilé formant coulisse (2) disposée en regard de celle (3) engagée dans le profilé formant pince (1) fait saillie vers l'intérieur de cette coulisse, en vue de venir lécher la face externe de la vitre coulissante.

7. Profilé selon l'une des revendications 1 à 6, **caractérisé en ce qu'**une ou des lèvres (14, 15) en un matériau souple rapporté sur la base du U de la coulisse font saillie vers l'intérieur et/ou l'extérieur de la coulisse.

8. Profilé selon l'une des revendications 1 à 7, **caractérisé en ce que** la branche (11) du profilé formant coulisse (2) disposée en regard de celle (3) engagée dans le profilé formant pince (1) comporte, sur sa face tournée vers l'extérieur, une couche (12) en un matériau souple, apte à résister au rayonnement ultra-violet et/ou coloré.

9. Profilé selon la revendication 8, en combinaison avec la revendication 6 et/ou avec la revendication 7, **caractérisé en ce que** la lèvre faisant saillie vers l'intérieur du profilé (2) formant coulisse et/ou une lèvre (14) faisant saillie vers l'extérieur à partir de la base du U de ce profilé sont attenantes à la couche (12).

## Patentansprüche

1. Dichtungsprofil für den Rahmen von Schiebefenstern von der Art, die einen ersten Abschnitt aufweist, der ein Klemmteil (1) mit U-förmigem Querschnitt umfasst, das zum Überdecken und Festklemmen einer vorspringenden Kante des Fensterrahmens geeignet ist, sowie einen zweiten als "Schiebeteil" bezeichneten Abschnitt (2), der an den ersten Abschnitt angrenzt und einen zum ersten umgekehrten U-förmigen Querschnitt aufweist, wobei dieser zweite Abschnitt (2) dazu bestimmt ist, das Schiebefenster bei seinen Bewegungen zu führen und in Schließstellung entlang des gesamten Abschnitts seines an den Fensterrahm einen anschließenden Umfangs dicht zu überdecken, wobei der erste U-förmige Abschnitt ein Klemmteil (1) bildet und der zweite U-förmige Abschnitt bzw. das "Schiebeteil" (2) dabei zwei getrennte elementare extrudierte oder geformte Profile darstellen, wobei ein U-Schenkel (3, 4) jedes elementaren Profils (1, 2) in das andere elementare Profil eingesetzt ist und dabei die auf diese Weise eingesetzten Schenkel (3, 4) sich über eine Seitenfläche in gegenseitiger Berührung befinden, **dadurch gekennzeichnet, dass** die sich gegenseitig berührenden Schenkel (3, 4) jedes der elementaren Profile (1, 2) fest miteinander durch Verklipsen der Abschnitte (5, 6) verbunden sind, die eine zu den Berührungsflächen im wesentlichen komplementäre Form aufweisen.

2. Dichtungsprofil nach Anspruch 1, **dadurch gekennzeichnet, dass** der U-Schenkel (3) des Profils, welches das in das Schiebeteil (2) eingesetzte Klemmteil (1) bildet, zwischen dem U-Schenkel dieses Schiebeteils, welches in den das Klemmteil (1) bildenden Abschnitt eingesetzt ist, und einer Zwischenwand (17) festgeklemmt ist, welche zur Innenseite des Schiebeteils ab der Basis des U desselben hin vorspringt, wobei der Schenkel (3) des Abschnitts, der das in das Schiebeteil eingreifende Klemmteil bildet, sich in Berührung mit angrenzenden Flächen des Schenkels des Schiebeteils und der Zwischenwand befindet, zwischen welchen er eingesetzt ist und dabei fest mit letzterer durch Verklipsen der Abschnitte (5, 6; 18, 19) mit im wesentlichen komplementär geformten, sich gegenseitig berührenden Flächen verbunden sind.

3. Dichtungsprofil nach einem der Ansprüche 1 und 2, **dadurch gekennzeichnet, dass** das Profilteil (1), welches ein Klemmteil bildet, aus einem Elastomermaterial oder einem anderen biegsamen thermoplastischen Werkstoff besteht und vorzugsweise eine verformbare metallische Verstärkung (7) aufweist.

4. Dichtungsprofil nach Anspruch 3, **dadurch gekennzeichnet, dass** der Schenkel (3) des Profilteils (1), welches ein in das Innere des Schiebeteils (2) eingesetztes Klemmteil bildet, mindestens eine zur Innenseite dieses Schiebeteils hin gerichtete Dichtungslippe (8, 20) aufweist, welche zum Überstreichen der Innenfläche des Schiebefensters geeignet ist.

5. Dichtungsprofil nach einem der Ansprüche 1 bis 4, **dadurch gekennzeichnet, dass** das Profilteil (2), welches das Schiebeteil bildet, aus einem starren thermoplastischen Werkstoff, vorzugsweise ohne Metallverstärkung, besteht.

6. Dichtungsprofil nach Anspruch 3, **dadurch gekennzeichnet, dass** mindestens eine Dichtungslippe (13) aus einem biegsamen Werkstoff, der auf dem Schenkel (11) des Profilteils angesetzt ist, welches das Schiebeteil (2) bildet, das gegenüber dem Schenkel (3) liegt, der in das Profilteil eingesetzt ist, welches das Klemmteil (1) bildet, zum Innenraum dieses Schiebeteils vorsteht, um die Außenfläche des Schiebefensters zu überstreichen.

7. Dichtungsprofil nach einem der Ansprüche 1 bis 6, **dadurch gekennzeichnet, dass** eine Dichtungslippe bzw. Dichtungslippen (14, 15) aus einem an der Basis des U des Schiebeteils angesetzten elastischen Material zur Innenseite und/oder Außenseite des Schiebeteils vorsteht bzw. vorstehen.

8. Dichtungsprofil nach einem der Ansprüche 1 bis 7, **dadurch gekennzeichnet, dass** der Schenkel des Profilteils, welche das Schiebeteil (2) bildet, das gegenüber dem Schenkel (3) angeordnet ist, der in das Profilteil eingesetzt ist, welches das Klemmteil (1) bildet, auf seiner nach außen gekehrten Seite eine Schicht (12) aus einem elastischen Material aufweist, das in der Lage ist, einer ultravioletten Strahlung und/oder gefärbten Strahlung zu widerstehen.

9. Dichtungsprofil nach Anspruch 8 in Verbindung mit Anspruch 6 und/oder Anspruch 7, **dadurch gekennzeichnet, dass** die zum Inneren des Profils (2), welches das Schiebeteil bildet, vorstehende Dichtungslippe und/oder eine von der Basis des U dieses Profils aus nach außen vorstehende Dichtungslippe (14) an die Schicht (12) angrenzt.

## Claims

1. Sealing profile for a sliding window frame of the type comprising a first portion forming a gripper (1) with a U-shaped cross-section and adapted to cap and grip a projecting edge of the window frame and a second so-called slideway portion (2), adjacent to the previous portion and having a U-shaped cross-section which is inverted relative thereto, this second portion (2) being intended to guide the sliding window in its movements and to cap it tightly in the closure position along the entire portion of its periphery contiguous with the window frame, the first U section portion forming a gripper (1) and the second U section or slideway portion (2) being two distinct extruded or moulded elementary profiles with one branch (3, 4) of the U of each elementary profile (1, 2) engaged inside the other elementary profile, the branches (3, 4) thus engaged being in mutual contact by a lateral face, this profile being **characterised in that** the branches (3, 4) in mutual contact of each of the elementary profiles (1, 2) are connected to one another by clipping portions (5, 6) of substantially complementary shape of the contacting faces.

2. Profile according to claim 1, **characterised in that** the branch (3) of the U of the profile forming a gripper (1) engaged in the profile forming a slideway (2) is gripped between the branch (5) of the U of this slideway engaged in the portion forming a gripper (1) and a partition (17) projecting toward the interior of the slideway from the base of the U thereof, the branch (3) of the portion forming a gripper engaged in the slideway being in contact with the contiguous faces of the branch of the slideway and of the partition between which it is engaged and being connected thereto by clipping of portions (5, 6; 18, 19) of substantially complementary shape of the surfaces in mutual contact.

3. Profile according to any one of claims 1 and 2, **characterised in that** the profile (1) forming a gripper is made of an elastomer or of a flexible thermoplastic material and preferably comprises a deformable metal framework (7).

4. Profile according to claim 3, **characterised in that** the branch (3) of the profile (1) forming a gripper engaged inside the slideway (2) comprises at least one lip (8, 20) directed toward the interior of this slideway and adapted to sweep the internal face of the sliding window.

5. Profile according to any one of claims 1 to 4, **characterised in that** the profile (2) forming a slideway is made of a rigid thermoplastic material, preferably without a metal framework.

6. Profile according to claim 5, **characterised in that** at least one lip (13) made of a flexible material attached to the branch (11) of the profile forming a slideway (2) disposed opposite the one (3) engaged in the profile forming a gripper (1) projects toward the interior of this slideway in order to sweep the external face of the sliding window.

7. Profile according to any one of claims 1 to 6, **characterised in that** one or more lips (14, 15) made of a flexible material attached to the base of the U of the slideway project toward the interior and/or exterior of the slideway.

8. Profile according to any one of claims 1 to 7, **characterised in that** the branch (11) of the profile forming a slideway (2) disposed opposite the one (3) engaged in the profile forming a gripper (1) comprises, on its outwardly turned face, a layer (12) made of a flexible material which is capable of resisting ultraviolet radiation and/or is coloured.

9. Profile according to claim 8 in combination with claim 6 and/or claim 7, **characterised in that** the inwardly projecting lip of the profile (2) forming a slideway and/or a lip (14) projecting toward the exterior from the base of the U of this profile are adjacent to the layer (12).
